# EUROPÄISCHE PATENTSCHRIFT

(11) **EP 2 078 452 B1**
(45) Veröffentlichungstag und Bekanntmachung des Hinweises auf die Patenterteilung: **15.12.2010**
(21) Anmeldenummer: 08000199.3
(22) Anmeldetag: 08.01.2008
(51) Int. Cl.: A01G 9/10

(54) **Pflanz- und Bodensubstrat auf der Basis von Naturfasern**
Plant and soil substrate based on natural fibres
Substrat pour plante et sol à base de fibres naturelles

(43) Veröffentlichungstag der Anmeldung: 15.07.2009
(73) Patentinhaber: Meier, Richard, 76229 Karlsruhe (DE)
(72) Erfinder: Meier, Richard, 76229 Karlsruhe (DE)
(74) Vertreter: Lenz, Steffen

(56) Entgegenhaltungen:
- WO-A-2004/080156
- WO-A-2005/004578
- US-A1- 2003 089 035
- US-A1- 2004 123 520

## Beschreibung

Die Erfindung betrifft ein Pflanz- und/oder Bodensubstrat zur Keimung, Aufzucht und/oder Kultivierung von Pflanzen, insbesondere Nutzpflanzen.

Solche Pflanz- oder Bodensubstrate sind in vielfältiger Ausgestaltung bekannt und werden zur Keimung, Aufzucht und Kultivierung von Pflanzen, insbesondere Nutzpflanzen, z.B. Gemüse, Blumen, Rasen einschließlich Rollrasen etc., sowohl im Freiland als auch in Gewächshäusern verbreitet eingesetzt. Neben natürlichem Boden werden sowohl natürliche als auch synthetische Substrate verwendet, welche für die Keimung und Wurzelbildung der jeweiligen Pflanzen günstig sind und als Speichermedium für Wasser und Nährstoffe dienen können. Beispiele solcher Substrate umfassen poröse Mineralien, wie Lava-, Bimsstein-, Sandsteinpartikel oder dergleichen, Baumrinde, Holzspäne, Moose, Silikate, Perlite, Flugasche, Kunststoff- und Glasfasern, insbesondere Schaumstoffe, usw.

Nachteilig bei.solchen Substraten ist grundsätzlich, daß sie häufig kein optimales Feuchtigkeitsgleichgewicht bieten können und darüber hinaus oft relativ teuer sind. Darüber hinaus sind einige der genannten Substrate mit weiteren erheblichen Nachteilen behaftet. So vermögen z.B. Glasfasern, wie sie vornehmlich in Form von Glaswolle vornehmlich in Gewächshäusern verbreitet eingesetzt werden, überhaupt kein Wasser zu speichern und ist der Abrieb solcher Glasfasern überdies lungengängig und somit gesundheitsgefährdend. Ferner sind solche Glasfasern nicht verrottbar. Was Kunststoffsubstrate, wie Kunststoffasern, Schaumstoffpartikel etc. betrifft, so existieren hier zwar biologisch abbaubare Kunststoffe, z.B. einige Polyolefine, doch läßt deren Wasserhaushalt ebenfalls zu wünschen übrig und belasten diese die sich zunehmend verknappenden, natürlichen Rohstoffressourcen und sind darüber hinaus nicht CO₂-neutral.

Ferner ist es bekannt, natürliche Fasern als Pflanz- oder Bodensubstrate einzusetzen. So beschreibt die DE 201 03 339 U1 ein Substrat auf der Basis von wasserbindendem Polyacrylat und/oder Silikat, welchem Fasermaterialien zugesetzt sein können, wobei auch Naturfasern, wie Kokos- und Bambusfasern, Stroh und Heu erwähnt sind. Der EP 0 778 726 B1 ist ein Pflanzsubstrat in Form eines mehrschichtigen Vlieses aus Fasern entnehmbar, wobei die Fasern natürlichen oder synthetischen Ursprungs sein können. Als Beispiele geeigneter Naturfasern sind Viskose- und Baumwollfasern genannt.

Aus der Druckschrift US 2004/123520 ist ein solche Pflantz- und/oder Bodensubstrat bekannt welche die grundlage für den Oberbegriff des Anspruchs 1 bildet.

Ein Nachteil gebräuchlicher Naturfasern besteht indes darin, daß diese Fasern äußerst hydrophil sind und dazu neigen, sich mit Wasser vollzusaugen, was zur Schimmelbildung und zum Absterben der kultivierten Pflanzen führen kann. Aus diesem Grund werden Naturfasern bislang auch praktisch ausschließlich in Mischung mit anderen Materialien eingesetzt, wie beispielsweise mit mineralischen Partikeln oder synthetischen Fasern/Partikeln.

Der Erfindung liegt daher die Aufgabe zugrunde, ein einfaches und preiswertes Pflanz- und/oder Bodensubstrat der eingangs genannten Art vorzuschlagen, welches den vorgenannten Nachteilen begegnet.

Erfindungsgemäß wird diese Aufgabe bei einem Pflanz- und/oder Bodensubstrat der eingangs genannten Art dadurch gelöst, daß es Fasern aus den Wurzelballen, den sogenannten "Neptun-" oder "Meerbällen", von Wurzelballen bildendem Seegras enthält.

Es wurde gefunden, daß die Fasern solcher auch mit "Neptunbällen" oder "Meerbällen" bezeichneten Wurzelballen von Wurzelballen bildendem Seegras, insbesondere aus der Gruppe der Spezies Posidonia *oceanica* und/oder Posidonia *australis* aus der Gattung der Neptungräser bzw. der Spezies Cymodocea *nodosa* aus der Gattung der Tanggräser, aufgrund praktisch nicht vorhandener Proteine höchst langzeitverrottungsbeständig und somit gegen einen Befall von Fäulnis, Bakterien, Pilzen und Insekten resistent sind, so daß sie nicht nur eine gegenüber gegenwärtig bereits für Pflanz- und Bodensubstraten verwendeten Fasern von - auf dem Land heimischen - Pflanzen längere Lebensdauer besitzen, sondern die auf ihnen kultivierten Pflanzen, wie insbesondere, wenn auch nicht ausschließlich, Nutzpflanzen, z.B. Gemüse, Blumen, Rasen einschließlich Rollrasen etc., zugleich auf natürliche Weise vor einem Schädlingsbefall zu schützen vermögen. Die erfindungsgemäße eingesetzten Wurzelballen sowie deren Fasern sind darüber hinaus - im Gegensatz zu den Blättern bzw. dem Seegras selbst - in relativ hohem Maße hydrophob, so daß sie anläßlich ihrer Verarbeitung, z.B. zu losen Fasern oder Faservliesen, keine nennenswerte Trocknungsschritte erfordern und bereits nach kurzer Lagerung keinerlei Wasser mehr enthalten. Sie vermögen indes jedoch Feuchtigkeit aus der Luft oder aus der Umgebung aufzunehmen, wie dies auch bei herkömmlichen Naturfasern der Fall und in gewissem Maße für Pflanz- und Bodensubstrate erwünscht ist, binden diese Feuchtigkeit jedoch nicht im Übermaß und quellen nicht auf und verhindern so insbesondere eine Schimmelbildung und/oder ein Verfaulen der Wurzeln der kultivierten Pflanzen, was üblicherweise zu einem Absterben derselben führt. Ein entscheidender Vorteil der Fasern der erfindungsgemäß eingesetzten Wurzelballen von Wurzelballen bildendem Seegras besteht darüber hinaus darin, daß sie im Gegensatz zu den Seegrasblättern überraschenderweise im wesentlichen frei von Salzen, wie Natriumchlorid, sind, was ihnen den Einsatz als Pflanz- und Bodensubstrat erst möglich macht. Sie sind überdies überraschenderweise nicht entflammbar, was insbesondere im Falle ihres Einsatzes in Gewächshäusern und/oder anläßlich ihrer Lagerung einen bedeutenden Sicherheitsaspekt darstellt. Ihre neutrale Kohlendioxidbilanz entspricht der von bereits verwendeten Naturfasern.

Die Wurzelballen oder "Neptun-" bzw. "Meerbälle" von Wurzelballen bildendem Seegras der Spezies Posidonia *oceanica*, Posidonia *australis* und Cymodocea *nodosa* sind im wesentlichen eiförmig und besitzen in der Regel die Größe des einbis zweifachen eines Hühnereis. Sie bestehen aus einem relativ kompakten Gewirke feiner Fasern mit einer Dichte von etwa 40 kg/m³ und lassen sich sehr einfach, beispielsweise durch manuelles Scheren bzw. Zerreiben, zerfasern. Es wird vermutet, daß es sich bei diesen Fasern neben Fasern unmittelbar von der Wurzel bzw. dem Rhizom (auch) um Blattrippen und gegebenenfalls auch Blattscheiden von solchen Gattungen von Seegras (wie insbesondere aus den Gattungen Posidonia *oceanica*, Posidonia *australis* und Cymodocea *nodosa,* welche im Flachwasserbereich von Meeren bis in Tiefen von etwa 50 m angesiedelt sind) handelt, bei welchen die Blattrippen am Rhizom ansetzen und sich vom Ansatz der Wurzel bis ins Blatt hinein erstrecken, wobei die Blattrippen nach Verrottung des demgegenüber weicheren, chlorophyllhaltigen Blattmaterials übrig bleiben. Die ball- bzw. eiförmigen Gebilde der Wurzelballen kommen vermutlich dadurch zustande, indem diese Fasern nach Ablösen von der Pflanze während des Aufenthaltes im Brandungsbereich des Meeres infolge der Wellenbewegungen agglomerieren und die Agglomerate in Form der Wurzelballen an Land gespült werden, wobei dieses Phänomen insbesondere auf sandigem Untergrund zu beobachten ist. Aufgrund ihres relativ hydrophoben Charakters trocknen die Wurzelballen dann in kurzer Zeit und lassen sich somit auf sehr einfache und kostengünstige Weise sammeln. Letzteres kann auf sehr umweltfreundliche Weise geschehen, weil lediglich die Wurzelballen bzw. die "Neptun-" oder "Meerbälle" gesammelt werden können, während das eigentliche Seegras, d.h. die Seegrasblätter, welche üblicherweise mittels schwerer Gerätschaften, wie Baggern, Radladern etc., von Stränden abtransportiert werden, nicht benötigt werden. Die chlorophyll- und salzhaltigen Seegrasblätter, die an Stränden abgelagert werden, können so wieder in das Meer zurück gespült werden, wie es aus ökologischen Gründen erwünscht ist, weil sie einen wertvoller Dünger und Nährstoff für die Kleinlebewesen der Seegraswiesen darstellen.

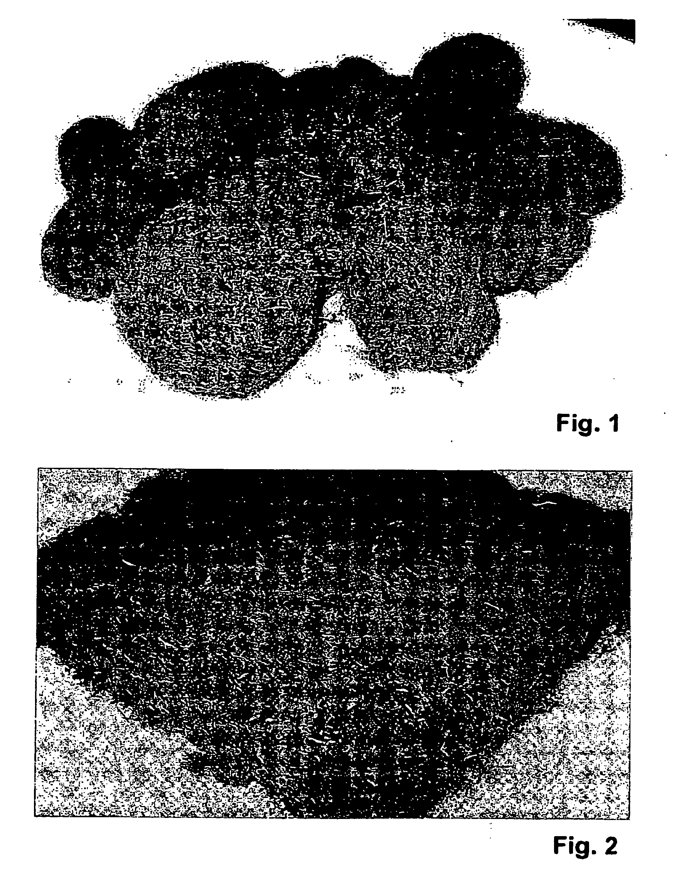

In Fig. 1 sind exemplarisch Wurzelballen ("Neptun-" oder "Meerbälle") der Spezies Posidonia oceanica dargestellt, während Fig. 2 dieselben Wurzelballen nach manueller Zerfaserung zeigt. Um aufzuzeigen, daß solche Wurzelballen einen überraschend geringen Salzgehaltes aufweisen, was ihnen den erfindungsgemäßen Einsatz als Pflanz- und Bodensubstrat erst möglich macht, wurde exemplarisch der Salzgehalt Fasern aus den Wurzelballen von Posidonia *oceanica* anhand von Leitfähigkeits- und Trocknungsrückstandsmessungen im Vergleich mit den zugehörigen Seegrasblättern ermittelt.

Zur Leitfähigkeitsmessung wurden 13,7 g des grob zerfaserten Materials gemäß Fig. 2 in 1 kg demineralisiertem Wasser suspendiert und die Leitfähigkeit der derart erzeugten Lösung so lange in kontinuierlichen Zeitabständen bei Raumtemperatur gemessen, bis keine Veränderung mehr festgestellt werden konnte. Zur Bestimmung der Leitfähigkeit diente ein kombiniertes pH-, Redox- und Leitfähigkeitsmeßgerät des Typs "multi 340i" der Firma "WTW" mit angeschlossener Leitfähigkeitsmeßzelle des Typs "Tetracon 325". Entsprechend wurde mit Seegrasblättern derselben Seegrasspezies verfahren. Die erhaltenen Werte sind in der nachfolgenden Tabelle zusammengestellt, wobei ersichtlich wird, daß die Wurzelballen eine um den Faktor 7,5 geringere Leitfähigkeit als die Blätter aufweisen, was auf einen erheblich geringeren Salzgehalt schließen läßt.

**Tabelle:**

| Posidonia *oceanica* | | |
|---|---|---|
| | Wurzelballen | Blätter *) |
| Leitfähigkeit direkt nach Suspendierung [µS/cm] | 182 | 2220 |
| Leitfähigkeit nach 86 h (jeweils konstant) [µS/cm] | 371 | 2800 |

| | | |
|---|---|---|
| (* Die Lagerung der Seegrasblätter in Wasser führte zu einer sichtbaren Gasentwicklung. | | |

Ferner wurde der anläßlich der oben beschriebenen Leitfähigkeitsmessung in Lösung gegangene Anteil der Probesubstanzen über den Trockenrückstand bei 105°C bestimmt. Hierzu wurden nach Beendigung der Leitfähigkeitsmessung von den jeweiligen Lösungen Teilmengen von 5 ml filtriert, auf einer Analysenwaage des Typs "BA 210S" der Firma "Sartorius" auf 0,1 mg genau gewogen und anschließend in einem Umlufttrockenschrank des Typs "UT 6420" der Firma "Heraeus" gänzlich eingedampft. Die Masse der zurückgebliebenen Feststoffe wurde durch erneutes Wiegen bestimmt. Als Mittelwert des Trockenrückstandes (bezogen auf die ursprünglich eingewogene Probenmasse) ergab sich für die Wurzelballen ein Massenanteil von 4,4%, während für die Seegrasblätter ein Massenanteil von 22,3% ermittelt wurde. Folglich beträgt der Trockenrückstand der Blätter mehr als das fünffache der Wurzelballen, was wiederum auf einen erheblich geringeren Salzgehalt der Wurzelballen hinweist. Die Experimente belegen somit die hervorragende Eignung der Wurzelballen von Wurzelballen bildendem Seegras als natürliches, CO₂-neutrales Pflanz- und Bodensubstrat für Pflanzen.

Während das erfindungsgemäße Pflanz- und/oder Bodensubstrat auf der Basis von Fasern aus den Wurzelballen, den sogenannten "Neptun-" oder "Meerbällen", von Wurzelballen bildendem Seegras, insbesondere aus der Gruppe der Spezies Prosidonia *oceanica*, Posidonia *australis* und/oder Cymodocea *nodosa,* selbstverständlich grundsätzlich in beliebigen Mischungsanteilen mit herkömmlichen Bodensubstratmaterialien auf der Basis von natürlichen oder synthetischen Stoffen eingesetzt werden kann, um die Eigenschaften des Substrates z.B. gezielt auf die jeweils zu kultivierende Pflanze einstellen zu können, sieht eine bevorzugte Ausführungsform vor, daß es wenigstens 10 Mass.-%, insbesondere wenigstens 20 Mass.-% und vorzugsweise einen überwiegenden Anteil an Fasern aus den Wurzelballen von Wurzelballen bildendem Seegras enthält. Der Anteil dieser Fasern kann dabei insbesondere auch wenigstens 60 Mass.-%, vorzugsweise wenigstens 70 Mass.-%, beispielsweise wenigstens 80 oder wenigstens 90 Mass.-%, betragen, oder das erfindungsgemäße Substrat kann auch praktisch gänzlich aus solchen Fasern bestehen. Das erfindungsgemäße Pflanz- und/oder Bodensubstrat kann einerseits die Fasern von zerfaserten Wurzelballen von Wurzelballen bildendem Seegras enthalten und insbesondere wenigstens einer Faserschicht von zerfaserten Wurzelballen von Wurzelballen bildendem Seegras aufweisen, wobei die Fasern z.B. in im wesentlichen loser Schüttung oder in verfilzter Form, wie insbesondere in Form eines Vlieses, vorliegen können. Das Substrat kann selbstverständlich auch mehrere Schichten solcher Fasern in loser und/oder verfilzter Form, gegebenenfalls in Kombination mit weiteren Schichten aus anderen, bekannten Substratmaterialien, umfassen. Das Pflanz- und/oder Bodensubstrat kann andererseits auch ganze Wurzelballen von Wurzelballen bildendem Seegras - also die etwa eiförmigen "Neptun-" oder "Meerbälle" in praktisch ganzer, unzerfaserter Form - enthalten und insbesondere wenigstens einer Schicht von im wesentlichen nicht zerfaserten Wurzelballen von Wurzelballen bildendem Seegras aufweisen, wiederum gegebenenfalls mit weiteren Schichten der vorgenannten Art. Folglich ist es natürlich auch möglich, daß das Pflanz- und/oder Bodensubstrat in einer solchen Form vorliegt, daß es sowohl die Fasern zerfaserter - loser oder auch verfilzter - Wurzelballen (z.B. als wenigstens eine obere Schicht) als auch ganze Wurzelballen von Wurzelballen bildendem Seegras (z.B. als wenigstens eine darunter angeordnete Schicht) enthält, wobei es beispielsweise wenigstens eine Schicht aufweisen kann, welche einerseits im wesentlichen nicht zerfaserte Wurzelballen, andererseits zerfaserte Wurzelballen von Wurzelballen bildendem Seegras umfaßt, so daß die Fasern z.B. in den Hohlräumen einer durch die ganzen Wurzelballen gebildeten Kugelpackung angereichert werden können, was ein vereinfachtes Eindringen der gebildeten Wurzeln der kultivierten Pflanzen in diese Hohlräume gewährleisten kann.

Das erfindungsgemäße Pflanz- und/oder Bodensubstrat kann darüber hinaus, wie bereits angedeutet, neben den Fasern aus den Wurzelballen von Wurzelballen bildendem Seegras bedarfsweise auch andere, bekannte Bodensubstratmaterialien, Düngemittel bzw. Nährstoffe, Schädlingsbekämpfungsmittel, wie Fungizide, Herbizide, Insektizide oder dergleichen, und/oder Samen der gewünschten Pflanzen enthalten, um das Bodensubstrat gezielt an die Bedürfnisse der zu kultivierenden Pflanzen einstellen zu können. Bekannte Bodensubstratmaterialien sind dabei im Hinblick auf eine hohe Umweltfreundlichkeit sowie auf eine neutrale CO₂-Bilanz vorzugsweise aus der Gruppe Naturfasern einschließlich Moosen, Rindenmulch usw., mineralische Partikel, wie beispielsweise Lava-, Sandstein-, Bimsstein-, Ton-, Sand-, Perlit-, Silikatpartikel etc., und Erde einschließlich Torf, Löß, Lehm und dergleichen gewählt sein.

## Patentansprüche

1. Pflanz- und/oder Bodensubstrat zur Keimung, Aufzucht und/oder Kultivierung von Pflanzen, insbesondere Nutzpflanzen, **dadurch gekennzeichnet, daß** es Fasern aus den Wurzelballen, den sogenannten "Neptun-" oder "Meerbällen", von Wurzelballen bildendem Seegras aus der Gruppe der Spezies Posidonia *oceanica*, Posidonia *australis* und/oder Cymodocea *nodosa* enthält.

2. Pflanz- und/oder Bodensubstrat nach Anspruch 1, **dadurch gekennzeichnet, daß** es einen Anteil von wenigstens 10 Mass.-%, insbesondere von wenigstens 20 Mass.-%, Fasern aus den Wurzelballen von Wurzelballen bildendem Seegras enthält.

3. Pflanz- und/oder Bodensubstrat nach Anspruch 1 oder 2, **dadurch gekennzeichnet, daß** es einen überwiegenden Anteil, insbesondere wenigstens 60 Mass.-%, vorzugsweise wenigstens 70 Mass.-%, Fasern aus den Wurzelballen von Wurzelballen bildendem Seegras enthält.

4. Pflanz- und/oder Bodensubstrat nach einem der Ansprüche 1 bis 3, **dadurch gekennzeichnet, daß** es wenigstens 80 Mass.-%, insbesondere wenigstens 90 Mass.-%, Fasern aus den Wurzelballen von Wurzelballen bildendem Seegras enthält.

5. Pflanz- und/oder Bodensubstrat nach einem der Ansprüche 1 bis 4, **dadurch gekennzeichnet, daß** es die Fasern von zerfaserten Wurzelballen von Wurzelballen bildendem Seegras enthält und insbesondere wenigstens einer Faserschicht von zerfaserten Wurzelballen von Wurzelballen bildendem Seegras aufweist.

6. Pflanz- und/oder Bodensubstrat nach einem der Ansprüche 1 bis 5, **dadurch gekennzeichnet, daß** es ganze Wurzelballen von Wurzelballen bildendem Seegras enthält und insbesondere wenigstens einer Schicht von im wesentlichen nicht zerfaserten Wurzelballen von Wurzelballen bildendem Seegras aufweist.

7. Pflanz- und/oder Bodensubstrat nach einem der Ansprüche 1 bis 6, **dadurch gekennzeichnet, daß** es sowohl die Fasern zerfaserter Wurzelballen als auch ganze Wurzelballen von Wurzelballen bildendem Seegras enthält und insbesondere wenigstens eine Schicht aufweist, welche einerseits im wesentlichen nicht zerfaserte Wurzelballen, andererseits zerfaserte Wurzelballen von Wurzelballen bildendem Seegras umfaßt.

8. Pflanz- und/oder Bodensubstrat nach einem der Ansprüche 1 bis 7, **dadurch gekennzeichnet, daß** den Fasern aus den Wurzelballen von Wurzelballen bildendem Seegras bedarfsweise bekannte Bodensubstratmaterialien, Düngemittel, Schädlingsbekämpfungsmittel und/oder Samen der gewünschten Pflanzen zugesetzt sind.

9. Pflanz- und/oder Bodensubstrat nach Anspruch 8, **dadurch gekennzeichnet, daß** die bekannten Bodensubstratmaterialien aus der Gruppe Naturfasern, mineralische Partikel und Erde gewählt sind.

## Claims

1. A plant and/or soil substrate for germinating, raising and/or culturing plants, in particular crop plants, **characterised in that** it contains fibres from the root balls, or "Neptune grass balls" or "sea balls", of root ball-forming seagrass from the group of species *Posidonia oceanica, Posidonia australis* and/or *Cymodocea nodosa.*

2. A plant and/or soil substrate according to claim 1, **characterised in that** it contains a proportion of at least 10 mass%, in particular of at least 20 mass%, of fibres from the root balls of root ball-forming seagrass.

3. A plant and/or soil substrate according to claim 1 or 2, **characterised in that** it contains a predominant proportion, in particular at least 60 mass%, preferably at least 70 mass%, of fibres from the root balls of root ball-forming seagrass.

4. A plant and/or soil substrate according to any one of claims 1 to 3, **characterised in that** it contains at least 80 mass%, in particular at least 90 mass%, of fibres from the root balls of root ball-forming seagrass.

5. A plant and/or soil substrate according to any one of claims 1 to 4, **characterised in that** it contains the fibres of shredded root balls of root ball-forming seagrass and in particular has at least one fibre layer of shredded root balls of root ball-forming seagrass.

6. A plant and/or soil substrate according to any one of claims 1 to 5, **characterised in that** it contains whole root balls of root ball-forming seagrass and in particular has at least one layer of substantially unshredded root balls of root ball-forming seagrass.

7. A plant and/or soil substrate according to any one of claims 1 to 6, **characterised in that** it contains both the fibres of shredded root balls and whole root balls of root ball-forming seagrass and in particular has at least one layer which comprises, on the one hand, substantially unshredded root balls and, on the other hand, shredded root balls of root ball-forming seagrass.

8. A plant and/or soil substrate according to any one of claims 1 to 7, **characterised in that** known soil substrate materials, fertilizers, pest control agents and/or seeds of the desired plants are added as required to the fibres from the root balls of root ball-forming seagrass.

9. A plant and/or soil substrate according to claim 8, **characterised in that** the known soil substrate materials are selected from the group of natural fibres, mineral particles and earth.

## Revendications

1. Substrat de plante ou de sol destiné à la germination, la croissance et/ou la culture de plantes, notamment de plantes cultivables, **caractérisé en ce qu'**il contient des fibres provenant de pelotes, lesdites « pelotes de Neptune » ou « pelotes de mer », de crin marin formé en pelotes appartenant au groupe d'espèces Posidonia oceanica, Posidonia australis et/ou Cymodocea nodosa.

2. Substrat de plante ou de sol selon la revendication 1, **caractérisé en ce qu'**il contient une part d'au moins 10 % en masse, notamment d'au moins 20 % en masse, de fibres tirées de pelotes provenant de crin marin formé en pelotes.

3. Substrat de plante ou de sol selon la revendication 1 ou 2, **caractérisé en ce qu'**il contient une part prépondérante, notamment au moins 60 % en masse, de préférence au moins 70 % en masse, de fibres tirées de pelotes provenant de crin marin formé en pelotes.

4. Substrat de plante ou de sol selon l'une quelconque des revendications 1 à 3, **caractérisé en ce qu'**il contient au moins 80 % en masse, notamment au moins 90 % en masse, de fibres tirées de pelotes provenant de crin marin formé en pelotes.

5. Substrat de plante ou de sol selon l'une quelconque des revendications 1 à 4, **caractérisé en ce qu'**il contient des fibres de pelotes fibreuses de crin marin formé en pelotes et comporte notamment au moins une couche fibreuse de pelotes fibreuses provenant de crin marin formé en pelotes.

6. Substrat de plante ou de sol selon l'une quelconque des revendications 1 à 5, **caractérisé en ce qu'**il contient des pelotes entières de crin marin formé en pelotes et comporte notamment au moins une couche de pelotes pour l'essentiel non fibreuses provenant de crin marin formé en pelotes.

7. Substrat de plante ou de sol selon l'une quelconque des revendications 1 à 6, **caractérisé en ce qu'**il contient aussi bien des fibres de pelotes fibreuses que des pelotes entières de crin marin formé en pelotes et qu'il comporte notamment au moins une couche comprenant d'une part pour l'essentiel des pelotes non fibreuses, d'autre part des pelotes fibreuses provenant de crin marin formé en pelotes.

8. Substrat de plante ou de sol selon l'une quelconque des revendications 1 à 7, **caractérisé en ce qu'**on ajoute si nécessaire aux fibres des pelotes de crin marin formé en pelotes des matières de substrat de sol, des engrais, des pesticides et/ou des graines des plantes souhaitées.

9. Substrat de plante ou de sol selon la revendication 8, **caractérisé en ce que** lesdites matières de substrat de sol connues sont sélectionnées parmi le groupe des fibres naturelles, des particules minérales et de la terre.
